# DEMANDE DE BREVET EUROPEEN

(11) **EP 1 801 492 A1**
(43) Date de publication de la demande: **27.06.2007**
(21) Numéro de dépôt: 06291951.9
(22) Date de dépôt: 15.12.2006
(51) Int. Cl.: F21S 8/10, F21V 8/00

(54) **Dispositif d'éclairage ou de signalisation à guide optique pour véhicule automobile**

(30) Priorité: 20.12.2005 FR 0512980
(71) Demandeur: VALEO VISION, 93012 Bobigny Cédex (FR)
(72) Inventeur: Godbillon, Vincent, 75011 Paris (FR); Jeanmichel, Vincent, 94100 Saint Maur des Fosses (FR); Vogt, Henning, 89340 Chaumont (FR)
(74) Mandataire: Renous Chan, Véronique

(57) **Abrégé**

L'invention a pour objet un dispositif d'éclairage et/ou de signalisation pour véhicule automobile comportant :
- un guide de lumière (G) destiné à être alimenté en lumière par une face d'entrée (FE) située à l'une de ses extrémités, afin de réaliser une première fonction photométrique,
- une source lumineuse (S) destinée à alimenter en lumière ledit guide de lumière (G) par sa face d'entrée (FE) afin de réaliser ladite première fonction,
- au moins un élément dioptrique ou réfléchissant (L) disposé à proximité de la face d'entrée (FE) et/ou de la face de sortie (FS) du guide optique et apte à prélever une partie de la lumière émise par la source (S), afin de réaliser une seconde fonction photométrique

## Description

La présente invention a pour objet un dispositif d'éclairage ou de signalisation équipant un véhicule automobile, comportant au moins un guide optique apte à produire une diffusion de la lumière sur au moins une partie de sa longueur. L'invention concerne aussi un véhicule comportant un tel dispositif d'éclairage ou de signalisation.

Dans le domaine de l'éclairage et de la signalisation de véhicules automobiles, il est de plus en plus fréquent d'utiliser des guides optiques. Un guide optique est, très schématiquement, un élément allongé de matière transparente, généralement sous forme d'un cylindre. A proximité de l'une des extrémités du guide, appelée face d'entrée du guide, est disposée une (ou plusieurs) sources lumineuse, par exemple une source lumineuse de petite taille du type diode électroluminescente : les rayons lumineux émis par cette source se propagent par réflexion totale dans la longueur du guide en direction de son extrémité opposée, appelée face terminale du guide. Une partie des rayons lumineux se propageant dans le guide va en sortir par la face dite face avant (ou face de sortie) du guide grâce à la présence d'éléments réfléchissants disposés sur la face dite face arrière (ou face réfléchissante) du guide, opposée à la précédente. Ces éléments réfléchissants sont constitués par exemple de prismes. Le guide émet ainsi de la lumière sur toute sa longueur. Il présente l'avantage de pouvoir prendre des formes géométriques très variées, être rectiligne ou en arc de cercle, et amener une surface éclairante même dans des zones peu accessibles du projecteur ou du feu du véhicule. Il participe ainsi fortement au style du projecteur ou du feu.

Les guides de lumière sont notamment utilisés dans des fonctions de signalisation, en tant que feu de position par exemple.

Le but de l'invention est de mettre au point de nouveaux types de guide de lumière améliorés, et présentant notamment plus de fonctionnalités.

L'invention a tout d'abord pour objet un dispositif d'éclairage et/ou de signalisation pour véhicule automobile comportant :
- un guide de lumière destiné à être alimenté en lumière par une face d'entrée située à l'une de ses extrémités, afin de réaliser une première fonction photométrique,
- une source lumineuse destinée à alimenter en lumière ledit guide de lumière par sa face d'entrée afin de réaliser ladite première fonction,
- au moins un élément dioptrique ou réfléchissant disposé à proximité de la face d'entrée et/ou de sortie du guide optique et apte à prélever une partie de la lumière émise par la source, afin de réaliser une seconde fonction photométrique.

Le guide de lumière est un élément apte à émettre de la lumière sur la majeure partie de sa longueur, et n'est pas un simple convoyeur de lumière comme le serait une fibre optique.
De préférence, l'élément dioptrique n'est pas un guide de lumière lui-même. De même, de préférence, l'élément réfléchissant n'affecte pas toute la section du guide/ de sa face d'entrée.

L'invention consiste ainsi à utiliser l'association connue source lumineuse/guide de lumière permettant d'obtenir, par exemple, une fonction de type feu de position, et d'y ajouter un élément optique, mais pas de source lumineuse supplémentaire, pour obtenir une autre fonction, de type feu de position latérale («side marker» en anglais) » par exemple. Obtenir deux fonctions avec une source lumineuse permet d'avoir un système optique très compact, ce qui est toujours un point très avantageux dans le domaine automobile. Par ailleurs, utiliser une même source lumineuse, ou un même groupement de sources lumineuses pour assurer deux fonctions est avantageux pour des raisons de baisse de consommation électrique. En outre, prélever ainsi de la lumière peut se faire sans aucune détérioration de l'obtention de la fonction « classique » obtenue par le guide de lumière.

En effet, on a souvent recours à des diodes électroluminescentes pour alimenter en lumière des guides de lumière, mais les diodes émettent dans un demi-plan, alors que l'on veut injecter de la lumière dans un guide dont la face d'entrée fait quelques millimètres carrés. On s'est donc efforcé de collimater, de canaliser au mieux la lumière émise par la diode vers la face d'entrée du guide, en adaptant la forme de la face d'entrée du guide pour mieux entourer la surface émissive de la diode par exemple. Il reste cependant toujours un peu de la lumière émise par la diode qui se trouve perdue, non utilisée par le guide. L'idée de l'invention est alors, non pas d'améliorer encore la conception de la face d'entrée du guide, mais au contraire de tirer partie de cet état de fait pour exploiter cette portion de lumière perdue, et réaliser ainsi une seconde fonction optique, à l'aide d'un élément dioptrique qui peut être simplement une lentille, ou d'un élément réfléchissant, comme un miroir. On peut ainsi obtenir deux fonctions photométriques, donc deux faisceaux lumineux avec des caractéristiques différentes (direction privilégiée, grille de répartition ....), avec une remarquable économie de moyens.

A noter que la source lumineuse de type diode est avantageusement placée à proximité immédiate de la face d'entrée du guide : elle émet directement de la lumière vers la face d'entrée. Mais, alternativement, elle peut aussi être disposée plus loin, la lumière émise par la source pouvant être acheminée/guidée jusqu'à la face d'entrée du guide par des moyens optiques du type fibre optique par exemple.

Différents modes de réalisation de l'invention sont possibles, dont ceux décrits ci-après. Ces modes de réalisation sont alternatifs ou cumulatifs.

Selon un premier mode de réalisation, l'élément dioptrique intercepte directement une partie de la lumière émise par la source lumineuse. Dans ce cas de figure, il s'agit soit de récupérer de la lumière qui, sinon, n'aurait jamais atteint la face d'entrée du guide, soit de prélever une fraction de la lumière qui sinon aurait atteint la face d'entrée de la lumière, de façon à ce que ce prélèvement n'affecte pas la fonction lumineuse assurée par le guide.

Selon un second mode de réalisation, l'élément dioptrique intercepte une partie de lumière émise par la source puis réfléchie par la face d'entrée vers l'extérieur du guide. En effet, quand des rayons lumineux atteignent la face d'entrée du guide, la plus grande partie de ceux-ci entrent dans le guide et s'y propagent, mais une autre partie est réfléchie vers l'extérieur du guide suivant les lois de Fresnel. A titre d'exemple, pour des guides faits en des matériaux transparents d'indice de réfraction d'environ 1,5 la partie des rayons réfléchie vers l'extérieur est d'environ 4% lorsque les rayons lumineux arrivent perpendiculairement à la face d'entrée. Cette proportion augmente avec l'inclinaison du rayon par rapport à la face d'entrée. On cherche habituellement à configurer la face d'entrée pour minimiser cette réflexion, mais ici, dans le cadre de l'invention, on va plutôt chercher à la contrôler précisément voire à l'amplifier. Ainsi, la face d'entrée du guide peut être choisie sous forme d'une surface au moins en partie courbe, de préférence convexe/bombée, ou au moins en partie inclinée par rapport à l'axe longitudinal du guide.

Selon un troisième mode de réalisation, une partie de la lumière émise par la source est réfléchie par un élément prismatique intégré au guide de lumière à proximité de sa face d'entrée, puis ressort du guide et traverse l'élément dioptrique. L'élément dioptrique peut être intégré ou non au guide de lumière. Les rayons récupérés par l'élément dioptrique sont alors issus, dans ce cas de figure, de multiples réflexions.

Avantageusement, l'élément dioptrique peut être intégré au guide. Cette configuration permet de mouler en une seule pièce les deux composants, et d'assurer un parfait positionnement relatif.

Il peut aussi être intégré dans un écran intermédiaire, ou être intégré à la glace de fermeture d'un projecteur ou d'un feu.

Pour faire la seconde fonction photométrique avec la même source lumineuse, on peut en fait distinguer deux choses : il faut d'abord prélever la quantité de lumière suffisante, et lui donner la direction et la répartition voulues. Selon les modes de réalisation, qui seront l'objet d'exemples détaillés ci-après, la lumière est récupérée par l'élément dioptrique avec déjà, par exemple, la direction privilégiée voulue, l'élément dioptrique n'ayant alors que le rôle de concentrer/rassembler les rayons. Mais la lumière interceptée par l'élément dioptrique peut aussi ne pas avoir, quand elle atteint cet élément, la direction voulue : il est alors nécessaire que l'élément dioptrique soit également apte à dévier au moins une partie des rayons lumineux les traversant.

L'élément dioptrique peut être une lentille avec une face de sortie munie de prismes, progressifs ou non. Ces prismes peuvent eux mêmes porter des éléments optiques, comme des stries ou des tores. Sa face d'entrée peut aussi être munie d'anneaux de Fresnel.

Avantageusement, la première fonction visée, celle obtenue avec le guide de lumière, est une fonction de signalisation du type feu de position, lanterne, et la seconde fonction visée, celle obtenue à l'aide de l'élément dioptrique, est une fonction de signalisation de type feu de position latérale («side marker» en anglais).

L'élément dioptrique ou réfléchissant peut également se trouver à proximité de la face de sortie du guide de lumière : la lumière pour réaliser la seconde fonction photométrique est alors prélevée non pas au début du guide, mais à la fin de celui-ci, et prélevée sur la quantité de lumière atteignant la fin du guide.

L'invention concerne également le véhicule automobile muni de projecteurs ou de feux comprenant le dispositif décrit plus haut.

L'invention sera décrite en détails à l'aide d'exemples de réalisation non limitatifs, illustrés par les figures suivantes :
Les figures 1 et 2 représentent des sections de guides optiques selon l'art antérieur destinés à être incorporés dans des feux de véhicule automobile.
Les figures 3a,3b,3c représentent trois variantes de sections de guide optique selon un premier mode de réalisation de l'invention,
Les figures 4a,4b,4c représentent trois configurations relatives guide optique/élément dioptrique selon l'invention,
Les figures 5a, 5b représentent deux formes d'élément dioptrique selon l'invention.
La figure 6 représente une configuration où guide optique et lentille dioptrique sont solidarisés.
La figure 7 représente une configuration où la lentille dioptrique fait partie de la glace de fermeture d'un feu.
La figure 8 représente une vue en trois dimensions du guide, de la source lumineuse et de la lentille selon une variante de l'invention,
Les figures 9a, 9b correspondent à une autre variante de l'invention, avec intégration d'un prisme à l'entrée du guide de lumière,
La figure 10 correspond à une vue en trois dimensions de la variante selon les figures 9a,9b.
Les figures 11 a,11 b correspondent à une autre variante de l'invention, alternative à celle des figures 9.
Les figures 12a,12b correspondent à une autre variante encore, où l'élément dioptrique est disposé à proximité de la face de sortie et non d'entrée du guide de lumière.

Toutes ces figures sont très schématiques et ne respectent pas nécessairement l'échelle pour en faciliter la lecture. Il est bien entendu que, dans toutes les figures suivantes, le guide de lumière est représenté indifféremment sous une forme courbe ou sous forme rectiligne, et que l'invention s'applique à toutes formes de guide.

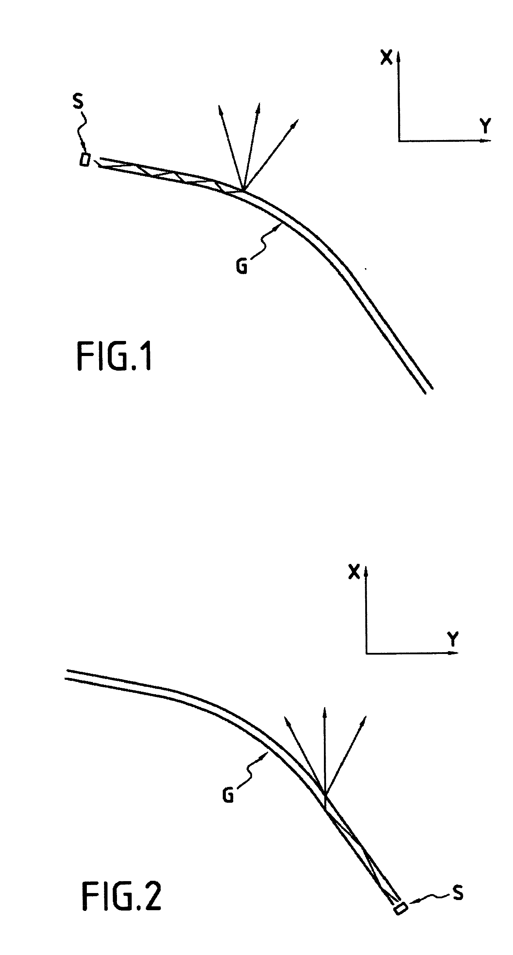

La figure 1 représente une section de guide de lumière G de l'art antérieur destiné à faire une fonction de feu de lanterne dans un feu de véhicule. Le guide est alimenté par une diode électroluminescente S disposée à proximité de l'une de ses extrémités, côté intérieur du véhicule. La direction x représentée correspond à la direction privilégiée de la lumière émise par le guide pour assurer la fonction lanterne. La direction y représente par contre la direction privilégiée recherchée pour la fonction « feu de position latérale («side marker» en anglais) » du même feu, que l'on peut obtenir avec une autre source et d'autres éléments optiques.

La figure 2 représente une autre configuration de guide selon l'art antérieur, où cette fois la diode S est disposée à l'extrémité du guide disposé dans le retour d'aile du feu. Les directions x et y ont la même signification que dans la figure 1.

On peut optimiser le guide de lumière de façon à ce qu'il renvoie de la lumière selon l'axe x , mais la fonction feu de position latérale («side marker» en anglais), qui demande une orientation privilégiée perpendiculaire à la fonction lanterne, nécessite des moyens optiques dédiés séparés.

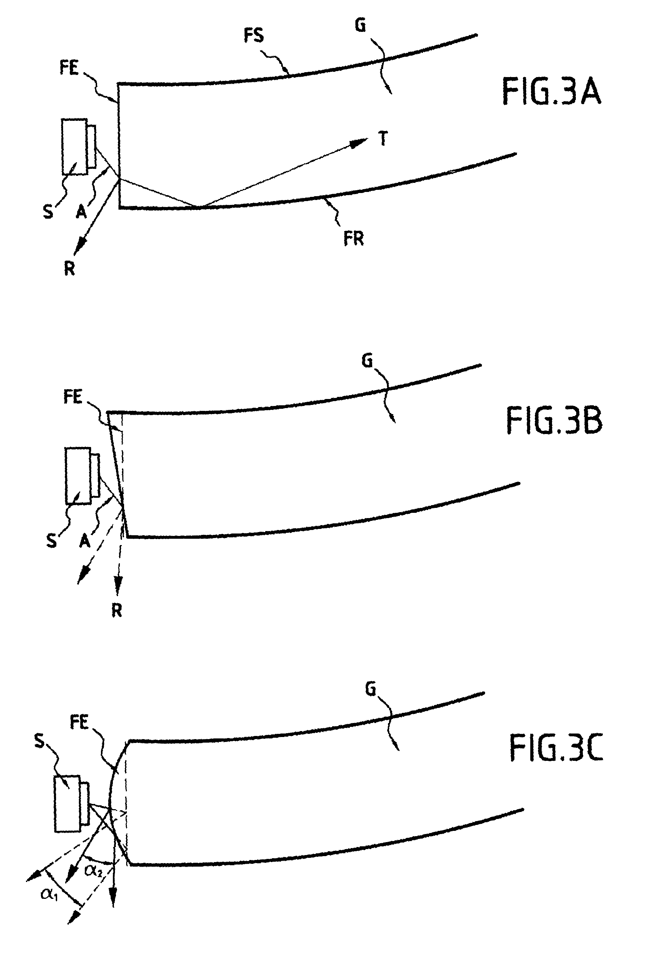

Les figures 3a,3b,3c correspondent à une première variante de réalisation de l'invention : le guide de lumière est destiné à remplir la fonction feu de position, et on récupère de la lumière émise par la source après réflexion sur la face d'entrée du guide G pour faire une fonction feu de position latérale («side marker» en anglais) .

Dans cette variante, le guide optique G a une section circulaire ; il est bien entendu qu'il peut aussi, dans d'autres modes de réalisation, avoir une section elliptique, ovale, voire carrée etc.

Dans cette variante, le guide optique G est à base de polymère transparent en polycarbonate (ou polymétacrylate de méthyle PMMA), de préférence de qualité cristal.

Ce guide optique présente une face dite d'entrée FE à l'une de ses extrémités, au regard de laquelle est disposée une diode électroluminescente S, et une face terminale FT, qui constitue l'extrémité opposée à la précédente, et qui est dépourvue de source lumineuse. Optionnellement, il est possible de prévoir une seconde source lumineuse à chacune des extrémités du guide. Le guide comporte par ailleurs deux faces principales orientées selon sa longueur:
- une première face FS constituant une face de sortie des rayons lumineux propagés dans le guide optique G ; cette face de sortie FS peut être lisse et continue, ou bien comporter des stries.
- une deuxième face FR, opposée à la première face FS, constituant une face de réflexion du guide optique G, qui est donc munie d'éléments réfléchissants, notamment des prismes. Pour plus de détails sur la géométrie des faces de réflexion et de sortie d'un tel guide, on peut se reporter aux brevets français FR 04 06 375 et FR04 06 376.

La figure 3a montre le cheminement d'un rayon lumineux atteignant la face d'entrée FE du guide G : il se décompose en une partie absorbée A à la surface du guide, une partie T qui est transmise dans le guide et qui va s'y propager, une partie R qui va être réfléchie. C'est cette partie de lumière réfléchie qui va permettre d'obtenir le flux de lumière suffisant pour obtenir la fonction feu de position latérale («side marker» en anglais). On peut alors amplifier le pourcentage de lumière réfléchie par la face d'entrée FE et/ou modifier son orientation privilégiée en modifiant sa géométrie :
- à la figure 3a, la face d'entrée est droite, elle est perpendiculaire à l'axe longitudinal du guide G, c'est la configuration la plus simple,
- à la figure 3b, la face d'entrée FE a été modifiée, elle est plane mais inclinée par rapport à l'axe longitudinal du guide : la flèche en traits pleins indique l'orientation générale de la lumière réfléchie par la face d'entrée du guide, à comparer à la flèche en traits pointillés correspondant à l'orientation obtenue avec la configuration selon la figure 3a,
- à la figure 3c, la face d'entrée FE a été modifiée, de façon à être convexe, bombée. On voit, avec les mêmes conventions, qu'à la figure précédente, que cette forme particulière permet de modifier l'orientation de la lumière réfléchie. On peut accentuer/adapter le degré de bombage de cette face, le moduler de façon appropriée pour ajuster au mieux cette orientation en fonction des besoins. On voit aussi que l'amplitude angulaire de la lumière renvoyée avec une face d'entrée plane (alpha 1) est plus petite que celle obtenue avec une face bombée (alpha 2).

Des figures 3a,3b et3c, on a pu voir comment on récupérait de la lumière pour faire la fonction feu de position latérale («side marker» en anglais), mais la répartition du faisceau réfléchi ne couvre généralement pas la grille photométrique complète nécessaire à l'obtention de cette fonction. C'est la raison pour laquelle il est approprié de prévoir des moyens optiques pour modifier la répartition du faisceau. Le choix de ces moyens optiques dépend de plusieurs paramètres : la forme de la face d'entrée, qui peut, comme on l'a vu, modifier l'orientation générale et/ou l'ouverture du faisceau réfléchi, la distance et la disposition relative de la diode par rapport à cette face d'entrée (qui va influer sur l'ouverture du faisceau réfléchi). En outre, la lumière émise par le guide près de la face d'entrée peut aussi participer à l'obtention de la fonction feu de position latérale («side marker» en anglais) : la lumière réfléchie par la face d'entrée ne vient alors que compléter la photométrie obtenue par le guide.

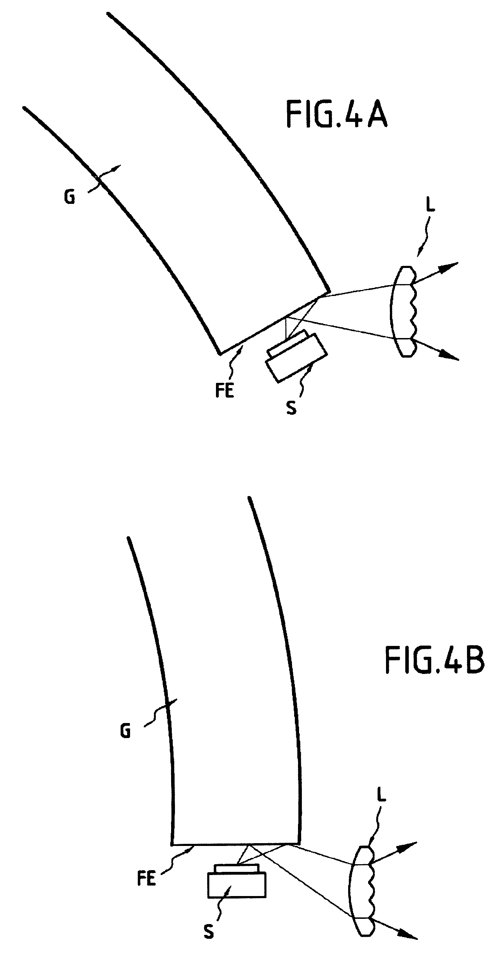

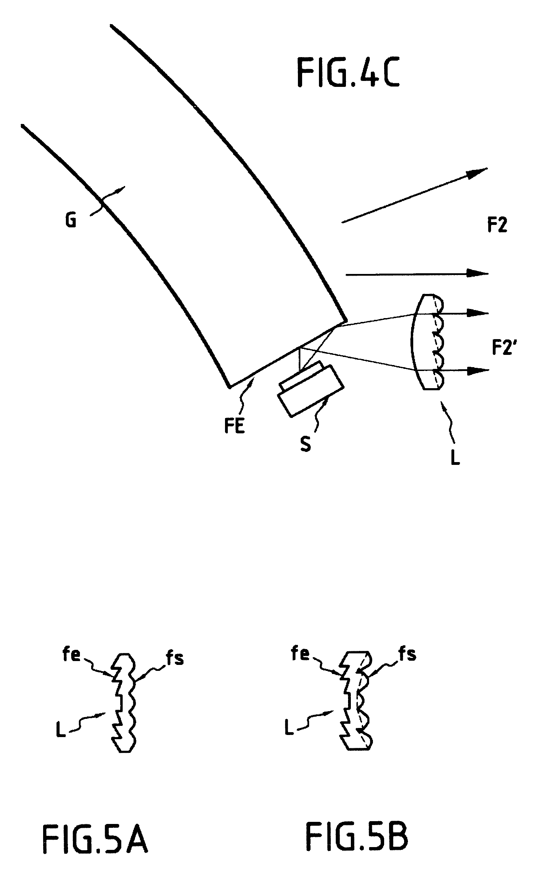

A ces choix en termes de forme de guide et de source lumineuse, on va ajouter la présence d'un élément dioptrique L : les figures 4a,4b,4c représentent une lentille L placée à proximité de la face d'entrée FE du guide et destinée à intercepter la lumière réfléchie par la face d'entrée du guide.

Dans le cas de la figure 4a, la lentille a une face d'entrée convexe, et une face de sortie avec des éléments optiques (stries ou tores par exemple) déposés sur une surface plane.

Dans le cas de la figure 4b, la lentille a une face d'entrée convexe, et une face de sortie avec des éléments optiques (stries ou tores par exemple) déposés sur des prismes (représentés en pointillés), qui permettent de modifier l'orientation et la répartition du faisceau qui traverse la lentille.

On note que les rayons sortant de la lentille ont substantiellement la même orientation générale et la même distribution dans le cas de la figure 4a et dans le cas de la figure 4b, alors que l'orientation et la distribution des rayons parvenant à la lentille sont différentes dans les deux cas de figures : cela a été rendu possible en ajoutant des prismes sur la face de sortie de la lentille dans le cas de la figure 4b.

Dans le cas de la figure 4c, une partie de la photométrie de la fonction feu de position latérale («side marker» en anglais) est réalisée par le début du guide F2, les rayons traversant la lentille L complétant la photométrie de F2 avec F2'. Dans ce cas là, les motifs de la face de sortie de la lentille L sont disposés de préférence dans le sens inverse de la figure 4b.

Les figures 5a, 5b illustrent d'autres variantes de lentille L :
- à la figure 5a, la lentille présente une face d'entrée fe fresnelisée, de façon à diminuer l'épaisseur de la lentille,
- à la figure 5b, la lentille présente en plus sur sa face de sortie fs des prismes progressivement inclinés du centre vers la périphérie de la lentille.

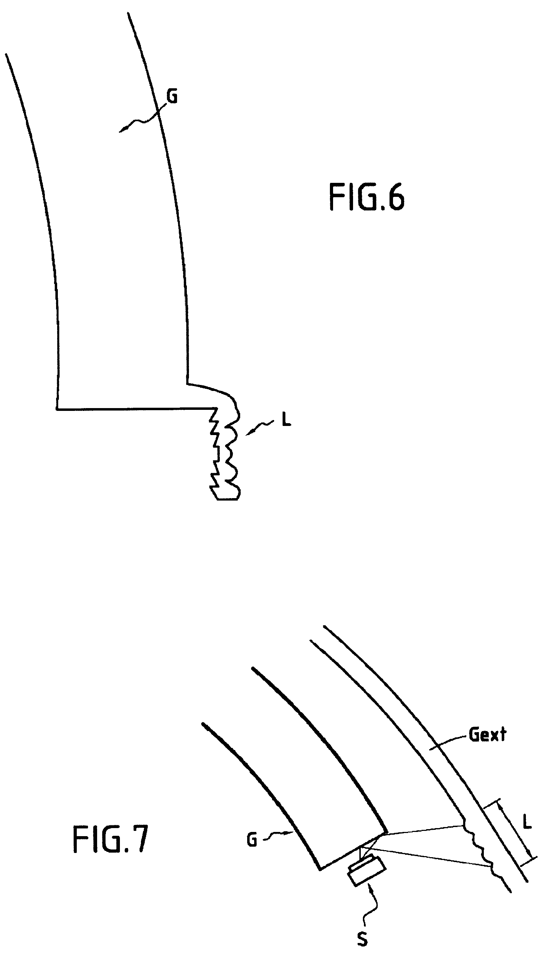

La figure 6 est une variante des figures 4 précédentes : pour garantir un positionnement correct de la lentille L par rapport au guide, ces deux éléments sont solidarisés. Ils peuvent être moulés en une seule étape. On peut aussi surmouler la lentille sur le guide. Cette configuration permet de réduire aussi le nombre de pièces dans le feu.

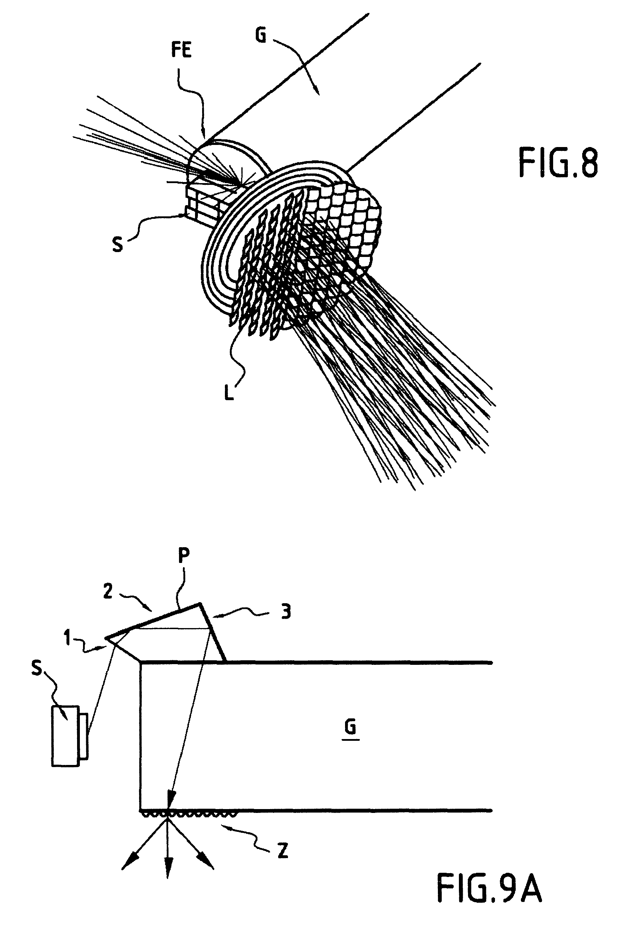

La figure 7 est encore une autre variante : cette fois, la lentille L fait partie intégrante de la glace extérieure Gext du feu du véhicule.

La figure 8 représente en trois dimensions le guide, la lentille et la diode selon la figure 5b. On y voit matérialisé le faisceau de lumière réfléchi par la face d'entrée du guide puis redirigée vers la lentille L.

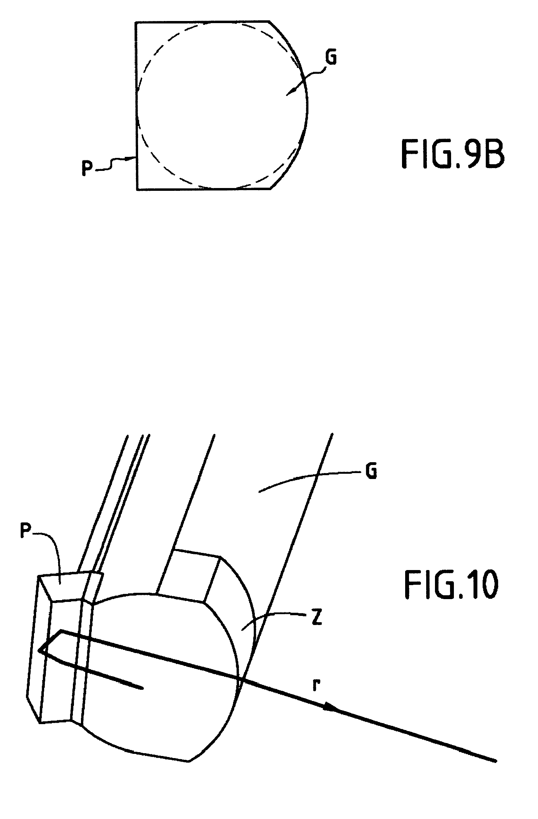

Les figures 9a, 9b correspondent à un autre mode de réalisation de l'invention : Ici, la lumière récupérée pour faire la fonction feu de position latérale («side marker» en anglais) provient d'un élément prismatique P à trois faces du côté de la face de réflexion FR du guide G. La figure 9a représente le parcours d'un rayon dans le prisme P à trois faces : les rayons issus de la diode S entrent par la première face 1 du prisme P en se réfractant. Ils se réfléchissent par réflexion totale sur les deux faces suivantes 2, 3 du prisme. Enfin, ils traversent le guide dans sa largeur et sortent par une zone Z, sur la face de sortie FS du guide à proximité de la face d'entrée FE. Cette zone Z est de préférence munie de motifs optiques disposés de façon à ce que le faisceau sortant ait la répartition photométrique voulue pour faire un feu de position latérale («side marker» en anglais), comme l'élément dioptrique des variantes précédentes. Les motifs optiques peuvent être des tores, des stries, des prismes, des tores ou des stries disposés sur des prismes. Alternativement, ces motifs optiques pourraient être déportés sur un élément optique distinct ou sur la glace de fermeture du feu.

La porteuse de ces motifs peut s'éloigner de la forme générale de la section du guide : la figure 9b représente la section transversale du guide au niveau du prisme P. En pointillés est représentée la section du guide en dehors de la zone s'étendant au niveau du prisme, à savoir une section ronde. En traits pleins, est représentée la surface porteuse du prisme.

La figure 10 est une représentation en trois dimensions de la variante selon les figures 9a, 9b. Le parcours d'un rayon r issu de la source S et se réfléchissant sur le prisme P y est représenté.

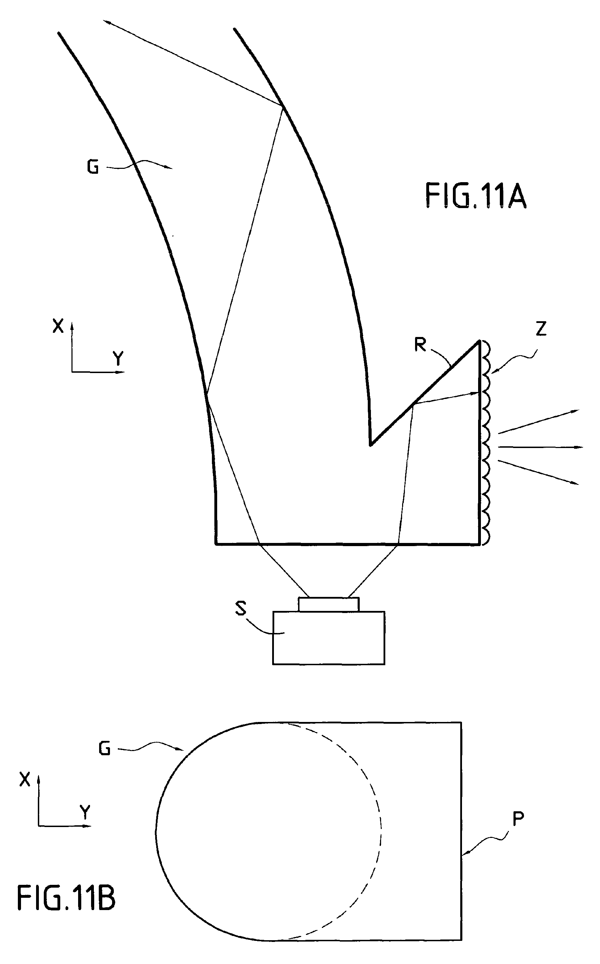

Les figures 11 a, 11 b montrent une variante de guide selon les figures 9 précédentes : ici, le coin « cube » est remplacé par une section surdimensionnée de la face d'entrée du guide, comme montré à la figure 11 b représentant une section du guide au niveau de sa face d'entrée : comme représenté à la figure 11 a, une première partie de la lumière émise par la source lumineuse rentre dans le guide et poursuite son chemin dans le guide pour assurer la fonction photométrique principale, l'autre partie rentre aussi par la face d'entrée , mais est ensuite réfléchie par la face R et ressort du guide par la surface Z. La réflexion sur la face R peut se faire par réflexion totale ou partielle. Alternativement, elle peut être obtenue en métallisant la surface R. On obtient ainsi la seconde fonction photométrique, par la lumière sortant de la surface Z.

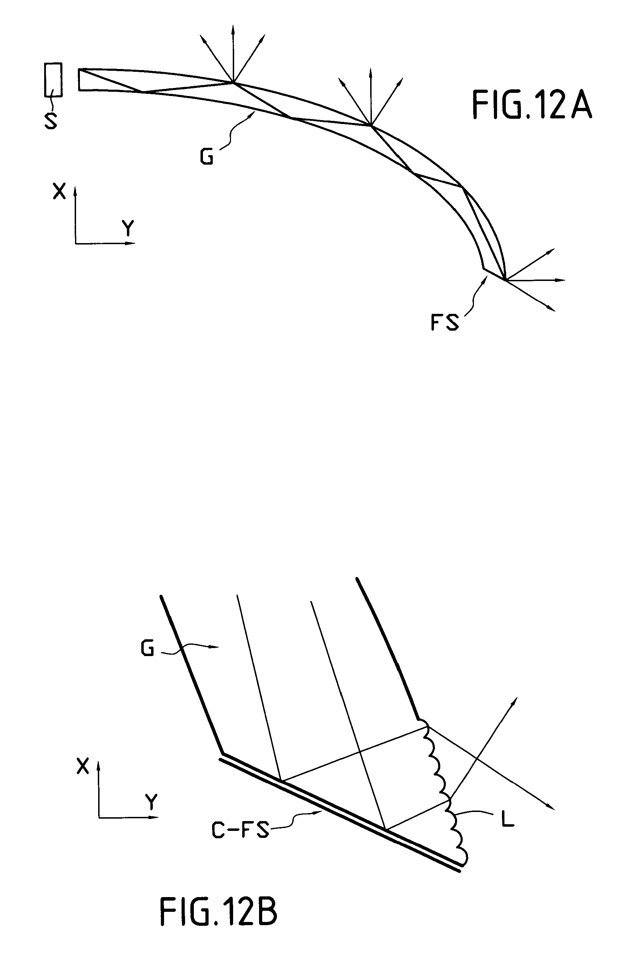

Les figures 12a,12b proposent une autre variante, où cette fois on prélève de la lumière pour faire une seconde fonction à proximité de la face de sortie FS du guide de lumière : tout ou partie des rayons lumineux atteignant la face de sortie est réfléchie sur ladite face (par réflexion totale ou partielle, ou en métallisant ladite face par exemple). Cette lumière réfléchie atteint la zone L qui est munie de moyens dioptriques de type prismes qui la dévie de façon appropriée pour qu'elle remplisse la seconde fonction photométrique voulue. Quand l'élément dioptrique/réfléchissant selon l'invention est placé au niveau ou à proximité de la face de sortie et non d'entrée du guide, il peut prélever substantiellement toute la lumière qui parvient à cette extrémité, alors que s'il se trouve près de la face d'entrée, il ne peut qu'en prélever une partie, pour que la fonction principale soit assurée.

En conclusion, l'invention permet d'obtenir deux fonctions, notamment deux fonctions de signalisation réalisées avec des photométries et des orientations relatives très différentes, et ceci avec une seule source lumineuse. Cela est d'autant plus avantageux dans le contexte des feux de véhicules avec de grands retours d'aile. L'élément optique ajouté peut s'intégrer de différentes façons : solidarisé au guide, à la glace, à un écran, à une platine de montage, ou même intégré au guide optique lui-même.

## Revendications

1. Dispositif d'éclairage et/ou de signalisation pour véhicule automobile comportant :
- un guide de lumière (G) destiné à être alimenté en lumière par une face d'entrée (FE) située à l'une de ses extrémités, afin de réaliser une première fonction photométrique,
- une source lumineuse (S) destinée à alimenter en lumière ledit guide de lumière (G) par sa face d'entrée (FE) afin de réaliser ladite première fonction,
- au moins un élément dioptrique ou réfléchissant (L) disposé à proximité de la face d'entrée (FE) et/ou de la face de sortie (FS) du guide optique et apte à prélever une partie de la lumière émise par la source (S), afin de réaliser une seconde fonction photométrique.

2. Dispositif selon la revendication précédente, **caractérisé en ce que** l'élément dioptrique ou réfléchissant (L) intercepte directement une partie de la lumière émise par la source lumineuse.

3. Dispositif selon l'une des revendications précédentes, **caractérisé en ce que** l'élément dioptrique ou réfléchissant (L) intercepte une partie de lumière émise par la source (S) puis réfléchie par la face d'entrée (FE) vers l'extérieur du guide (G).

4. Dispositif selon l'une des revendications précédentes, **caractérisé en ce qu'**une partie de la lumière émise par la source (S) est réfléchie par un élément prismatique intégré au guide de lumière (G) à proximité de sa face d'entrée (FE), puis ressort du guide en traversant l'élément dioptrique (L), l'élément dioptrique étant intégré ou non au guide optique.

5. Dispositif selon l'une des revendications précédentes, **caractérisé en ce que** l'élément dioptrique ou réfléchissant (L) est intégré au guide de lumière.

6. Dispositif selon l'une des revendications précédentes, **caractérisé en ce que** l'élément dioptrique ou réfléchissant (L) est intégré à un écran intermédiaire ou à la glace extérieure du dispositif.

7. Dispositif selon l'une des revendications précédentes, **caractérisé en ce que** la face d'entrée (FE) du guide (G) est une surface au moins en partie courbe, notamment convexe, ou au moins en partie inclinée.

8. Dispositif selon l'une des revendications précédentes, **caractérisé en ce que** l'élément dioptrique (L) est apte à dévier au moins une partie des rayons lumineux le traversant.

9. Dispositif selon l'une des revendications précédentes, **caractérisé en ce que** l'élément dioptrique (L) est une lentille avec une face de sortie munie de prismes, progressifs ou non progressifs, portant éventuellement eux-mêmes d' éléments optiques comme des stries ou des tores.

10. Dispositif selon l'une des revendications précédentes, **caractérisé en ce que** l'élément dioptrique (L) est une lentille avec une face d'entrée munie d'anneaux de Fresnel.

11. Dispositif selon l'une des revendications précédentes, **caractérisé en ce que** l'élément dioptrique ou réfléchissant (L) est disposé à proximité de la face de sortie (FS) du guide optique, de façon à prélever tout ou partie de la lumière atteignant ladite face de sortie.

12. Dispositif selon l'une des revendications précédentes, **caractérisé en ce que** la première fonction photométrique est une fonction de feu de position, de lanterne.

13. Dispositif selon l'une des revendications précédentes, **caractérisé en ce que** la seconde fonction photométrique est une fonction de type feu de position latérale.

14. Dispositif selon l'une des revendications précédentes, **caractérisé en ce que** la source lumineuse (S) est une diode électroluminescente ou un groupement de diodes électroluminescentes.
